**Europäisches Patentamt**

**European Patent Office**

**Office européen des brevets**

(19)

(11) Veröffentlichungsnummer: **0 407 865 A2**

# EUROPÄISCHE PATENTANMELDUNG

(12)

(21) Anmeldenummer: **90112720.9**

(22) Anmeldetag: **04.07.90**

(51) Int. Cl.⁵: **F16J 1/09, F16F 9/18**

(30) Priorität: **08.07.89 DE 8908341 U**

(43) Veröffentlichungstag der Anmeldung:
**16.01.91 Patentblatt 91/03**

(84) Benannte Vertragsstaaten:
**DE ES FR IT**

(71) Anmelder: **SINTERMETALLWERK KREBSÖGE GMBH**
**Krebsöge 13-15**
**D-5608 Radevormwald(DE)**

(72) Erfinder: **Müller, Udo**
**Mittelstrasse 18**
**D-5608 Radevormwald(DE)**

(74) Vertreter: **Maxton, Alfred et al**
**Patentanwälte Maxton Maxton Langmaack**
**Goltsteinstrasse 93 VII Postfach 51 08 06**
**D-5000 Köln 51(DE)**

(54) **Kolben für Schwingungsdämpfer, insbesondere Stossdämpfer von Kraftfahrzeugen.**

(57)
2.1 Der Kolben (11) für Schwingungsdämpfer wird von einer Seite zur anderen mindestens von einem Kanal für ein Strömungsmittel durchsetzt. Der Kolben (11) ist doppeltwirkend ausgestaltet und weist mehrere Einström- (12) und Ausströmkanäle (24) auf. Er kann auf pulvermetallurgischem Wege hergestellt werden. Der Erfindung liegt die Aufgabe zugrunde, die Strömungsverhältnisse des Kolbens (11) zu verbessern.

2.2 Diese Aufgabe wird gemäß der Erfindung dadurch gelöst, daß die Eintrittsöffnung (13) des Kanals im wesentlichen radial außerhalb und die Austrittsöffnung (14) im wesentlichen radial innerhalb einer Ebene (15) angeordnet ist, die den Kanal in Achsrichtung (16) des Kolbens (11) durchsetzt.

2.3 Ein solcher Kolben (11) eignet sich insbesondere für Stoßdämpfer von Kraftfahrzeugen.

FIG. 1

EP 0 407 865 A2

# KOLBEN FÜR SCHWINGUNGSDÄMPFER, INSBESONDERE STOSSDÄMPFER VON KRAFTFAHRZEUGEN

Die Erfindung betrifft einen Kolben für Schwingungsdämpfer, insbesondere Stoßdampfer von Kraftfahrzeugen, den von einer Seite zur anderen mindestens ein Kanal für ein Strömungsmittel durchsetzt.

Wenn ein derartiger Kolben für einen Stoßdämpfer von Kraftfahrzeugen verwandt wird, ist er doppeltwirkend ausgestaltet und weist mehrere Einström- und Ausströmkanäle auf. Ein solcher Kolben kann auch auf pulvermetallurgischem Wege hergestellt werden.

Es ist ein pulvermetallurgisch hergestellter Kolben der eingangs genannten Gattung bekannt, bei dem die Eintrittsöffnung des Kanals außen mit radialem Abstand von der Austrittsöffnung angeordnet ist. Dieser radiale Abstand hat zwangsläufig zur Folge, daß in dem Kanal Hinterschneidungen bestehen. Wegen dieser Hinterschneidungen ist es nicht möglich, bei der pulvermetallurgischen Herstellung des Kolbens den Rohling in einem Arbeitsgang zu pressen. Ein solcher Kolben muß daher zweiteilig hergestellt werden, wobei die beiden Teile spiegelbildlich zueinander ausgestaltet sein können. In jedem Falle ist es aber erforderlich, die beiden Teile nach dem Pressen miteinander zu verbinden, beispielsweise zu verschweißen.

Eine solche Herstellungsweise verursacht selbstverständlich verhältnismäßig hohe Kosten. Hinzu kommt, daß die Verschweißung der beiden Einzelteile nicht in jedem Falle zuverlässig dicht ist, so daß Bypässe entstehen können. Solche Bypässe für das Strömungsmittel, beispielsweise Hydrauliköl, stören die Wirkungsweise eines Schwingungsdämpfers, insbesondere Stoßdämpfers.

Auch die Hinterschneidungen des bekannten Kolbens haben nachteilige Folgen. Verwirbelungen des Strömungsmittels, insbesondere des Hydrauliköls bei Stoßdämpfern, sind unvermeidbar. Dadurch ist die aus dem Strömungsvorgang folgende Dämpfungswirkung des Schwingungsdämpfers nicht mehr eindeutig definiert. Außerdem führen de Verwirbelungen zu einer unerwünschten Erhöhung der Temperatur des Strömungsmittels. Verwirbelungen in Verbindung mit Unterdruck und Erwärmung können zum Verschäumen des Hydrauliköls führen und auch dadurch die Dämpfungswirkung vermindern.

Der Erfindung liegt die Aufgabe zugrunde, die vorstehenden Nachteile zu beseitigen und einen Kolben zu schaffen, dessen Strömungsverhältnisse verbessert sind. Insbesondere soll die durch Strömungsbedingungen verursachte Dämpfungswirkung kalkulierbarer werden, und nicht zuletzt soll ein solcher Kolben auch auf pulvermetallurgischem Wege einstückig herstellbar sein.

Diese Aufgabe wird gemäß der Erfindung dadurch gelöst, daß die Eintrittsöffnung des Kanals im wesentlichen radial außerhalb und die Austrittsöffnung im wesentlichen radial innerhalb einer Ebene angeordnet ist, die den Kanal in Achsrichtung des Kolbens durchsetzt. Der Kanal verläuft also zumindest in einer Ebene durchgängig in Achsrichtung des Kolbens von seiner Eintrittsöffnung bis zu seiner Austrittsöffnung. Dabei kann die Eintrittsöffnung entweder vollständig radial außerhalb der Ebene und an diese angrenzend angeordnet sein; es ist aber auch möglich, daß sich die Eintrittsöffnung teilweise radial innerhalb der Ebene befindet. Entsprechendes gilt für die Austrittsöffnung.

Die Vermeidung eines radialen Abstandes zwischen Eintritts-und Austrittsöffnung hat zur Folge, daß keine Hinterschneidungen entstehen. Außerdem ermöglicht es diese Maßnahme, daß bei pulvermetallurgischer Herstellung des Kolbens die Vorform beidseits in einem Arbeitsgang gepreßt werden kann. Es ist dann beispielsweise möglich, daß die Eintrittsöffnung ganz oder überwiegend von einem Eintrittsdorn geformt wird, entsprechend die Austrittsöffnung von einem Austrittsdorn. Beide Dorne können sich während des Pressens gegenläufig bewegen und in der Ebene aneinandergrenzen, die den Kanal in Achsrichtung des Kolbens durchsetzt.

Der Kolben gemäß der Erfindung kann insbesondere für Stoßdämpfer von Kraftfahrzeugen so ausgestaltet werden, daß er doppeltwirkend ist und mehrere Einström- sowie Ausströmkanäle aufweist. Dabei können die Einström- und Ausströmkanäle in Umfangsrichtung über den Kolben regelmäßig verteilt angeordnet sein. Zweckmäßig sind die Einström- und Ausströmkanäle abwechselnd angeordnet. Weiterhin können die Eintritts- und Austrittsöffnungen in Umfangsrichtung von je einem Außen- und einem Innenkreisbogen gebildet sein, die konzentrisch angeordnet sind; dabei ist die Ebene zylindrisch und konzentrisch zu den Außen- sowie Innenkreisbogen. Entsprechend zylindrisch sind der Eintritts- und der Austrittsdorn an ihrer gemeinsamen Berührungsfläche ausgebildet.

Gemäß einer bevorzugten Ausgestaltung der Erfindung ist der Innenradius der Eintrittsöffnung gleich dem Außenradius der Austrittsöffnung. Dann wird die Eintrittsöffnung vom Eintrittsdorn bzw. die Austrittsöffnung vom Austrittsdorn geformt. In weiterer Ausgestaltung der Erfindung kann die Differenz von Außen- und Innenradius der Eintrittsöffnung gleich der Differenz von Außen- und Innenradius der Austrittsöffnung sein. Dies hat zur Folge, daß sich der Querschnitt des Kanals in Strömungsrichtung kontinuierlich vermindert. Gleichzeitig liegen besonders günstige Strömungsverhältnisse vor mit einem definierbaren Strömungswiderstand und damit einer kalkulierbaren Dämpfungswirkung.

Bei einem derartigen Kolben können weiterhin die Eintrittsöffnungen auf dem Innenkreisbogen und die Austrittsöffnungen auf dem Außenkreisbogen jeweils einen Ventilsitz aufweisen, der auf jeder Seite des Kolbens von einer im wesentlichen kreisförmigen Ventilscheibe beaufschlagt wird. Dann können nicht nur für den Kolben sondern auch die beiden Ventilscheiben symmetrische Verhältnisse vorliegen, insbesondere beide Ventilscheiben gleiche Durchmesser aufweisen. Es bleibt jedoch unbenommen, daß beispielsweise durch unterschiedliche Dicken der beiden Ventilscheiben auch unterschiedliche Dämpfungswirkungen bewirkt werden. Gemäß einer besonderen Ausgestaltung der Erfindung kann der Ventilsitz als Dichtlippe ausgebildet sein, die jeweils von Eintrittsöffnung zu Austrittsöffnung radial und im wesentlichen um ihre Breite versetzt angeordnet ist.

Für eine günstige pulvermetallurgische Herstellung des Kolbens gemäß der Erfindung schließen die Wände der Ein ström- und Ausströmkanäle gegenüber der Achsrichtung des Kolbens einen Winkel von höchstens etwa 15 Grad ein. Durch diese Maßnahme wird vermieden, daß beim Pressen sogenannte Überpressungen entstehen. Der Kolben wird homogen verpreßt. Auch hat diese Ausgestaltung der Erfindung zur Folge, daß beim Durchströmen keine Ablösungen auftreten. Der Druckverlauf nimmt in Strömungsrichtung kontinuierlich ab. Die Strömungsverhältnisse können in weiterer Ausgestaltung der Erfindung noch dadurch verbessert werden, daß die Einström- und Ausströmkanäle jeweils einen Einlauf und einen Auslauf aufweisen, die in Achsrichtung des Kolbens ausgebildet sind.

Weitere Merkmale und Vorteile der Erfindung ergeben sich aus der folgenden Beschreibung eines die Erfindung nicht beschränkenden Ausführungsbeispiels, wobei auf die Zeichnung Bezug genommen wird. Es zeigen:

Fig. 1 einen Kolben gemäß der Erfindung im Querschnitt gemäß Linie I-I der Fig. 2 und

Fig. 2 den Kolben gemäß Fig. 1 in der Draufsicht.

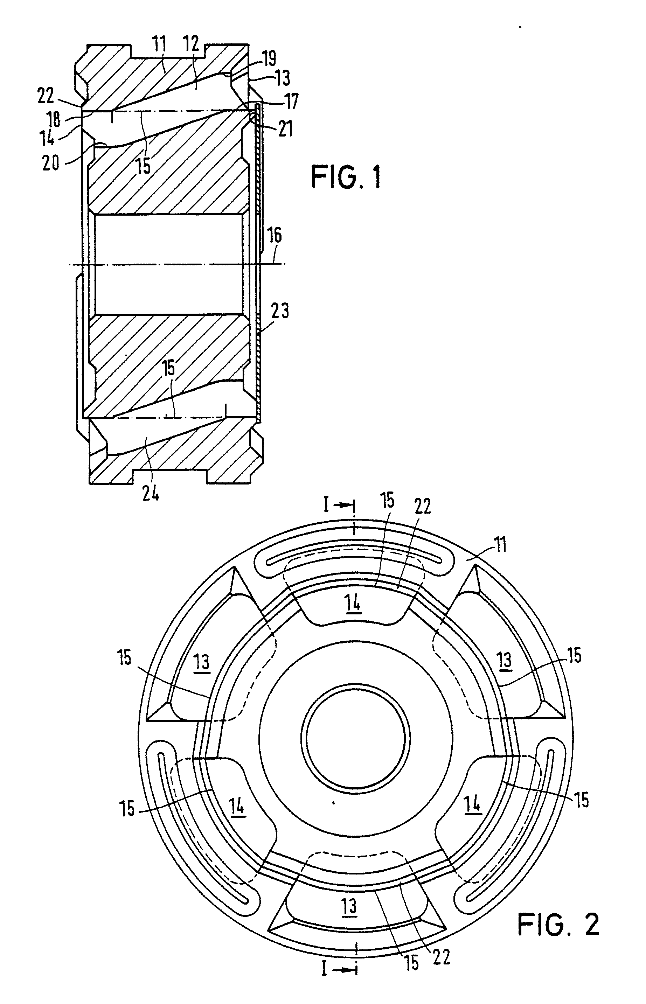

In Fig. 1 ist ein Kolben 11 für Stoßdämpfer von Kraftfahrzeugen dargestellt, der doppeltwirkend ausgestaltet ist. Im gezeigten Querschnitt durchsetzt ein Einströmkanal 12 den Kolben 11 von einer Seite zur anderen. Dabei ist eine Eintrittsöffnung 13 radial außerhalb und eine Austrittsöffnung 14 radial innerhalb einer Ebene 15 angeordnet, die den Kanal 12 in Richtung einer Achse 16 des Kolbens durchsetzt. Ein Innenradius 17 der Eintrittsöffnung 13 ist gleich einem Außenradius 18 dem Austrittsöffnung 14. Dabei ist die Differenz von Außenradius 19 und Innenradius 17 der Eintrittsöffnung 13 gleich der Differenz von Außenradius 18 und Innenradius 20 der Austrittsöffnung 14.

Die Eintrittsöffnung 13 weist auf einem Innenkreisbogen einen Ventilsitz 21 auf. Entsprechendes gilt für die Austrittsöffnung 14 auf einem Außenkreisbogen für einen Ventilsitz 22. Der Ventilsitz 21 der Eintrittsöffnung 13 wird von einer im wesentlichen kreisförmigen Ventilscheibe 23 beaufschlagt, die an der Austrittsöffnung 14 nicht dargestellt ist.

Die Wände des Einströmkanals 12 schließen gegenüber der Achsrichtung 16 des Kolbens 11 einen Winkel von etwa 15 Grad ein. Weiterhin weist der Einströmkanal 12 sowohl einen Einlauf als auch einen Auslauf auf, die in Achsrichtung 16 des Kolbens 11 ausgebildet sind.

Die vorstehende Beschreibung gilt entsprechend für einen Ausstömkanal 24.

Weitere Ausgestaltungen der Erfindung sind möglich, ohne daß dabei der Erfindungsgedanke verlassen wird. So kann die Differenz von Außenradius 19 und Innenradius 17 der Eintrittsöffnung 13 ungleich der Differenz von Außenradius 18 und Innenradius 20 der Austrittsöffnung 14 sein. Auch ist es möglich, daß die Eintrittsöffnung 13 und/oder die Austrittsöffnung 14 in Umfangsrichtung von der Form eines Kreisbogens abweicht.

## Ansprüche

1. Kolben für Schwingungsdämpfer, insbesondere Stoßdämpfer von Kraftfahrzeugen, den von einer Seite zur anderen mindestens ein Kanal für ein Strömungsmittel durchsetzt, dadurch **gekennzeichnet,** daß die Eintrittsöffnung (13) des Kanals (12, 24) im wesentlichen radial außerhalb und die Austrittsöffnung (14) im wesentlichen radial innerhalb einer Ebene (15) angeordnet ist, die den Kanal (12, 24) in Achsrichtung (16) des Kolbens (11) durchsetzt.

2. Kolben nach Anspruch 1, dadurch gekennzeichnet, daß der Kolben (11) doppeltwirkend ausgestaltet ist und mindestens je einen Einström- (12) und einen Ausströmkanal (24) aufweist.

3. Kolben nach Anspruch 2, dadurch gekennzeichnet, daß mehrere Einström- (12) und Ausströmkanäle (24) in Umfangsrichtung regelmäßig verteilt angeordnet sind.

4. Kolben nach Anspruch 3, dadurch gekennzeichnet, daß die Einström- (12) und Ausströmkanäle (24) abwechselnd angeordnet sind.

5. Kolben nach einem der Ansprüche 2 bis 4, dadurch gekennzeichnet, daß die Eintritts- (13) und Austrittsöffnungen (14) in Umfangsrichtung von je einem Außen- und einem Innenkreisbogen gebildet werden, die konzentrisch angeordnet sind, während die Ebene zylindrisch ist.

6. Kolben nach Anspruch 5, dadurch gekennzeichnet, daß der Außen- und Innenkreisbogen an ihren beiden Enden im wesentlichen in radialer Richtung miteinander ver bunden sind.

7. Kolben nach Anspruch 5 oder 6, dadurch gekennzeichnet, daß der Innenradius (17) der Eintrittsöffnung (13) gleich dem Außenradius (18) der Austrittsöffnung (14) ist.

8. Kolben nach Anspruch 7, dadurch gekennzeichnet, daß die Differenz von Außen- (19) und Innenradius (17) der Eintrittsöffnung (13) gleich der Differenz von Außen(18) und Innenradius (20) der Austrittsöffnung (14) ist.

9. Kolben nach Anspruch 8, dadurch gekennzeichnet, daß die Eintrittsöffnungen (13) auf dem Innenkreisbogen und die Austrittsöffnungen (14) auf dem Außenkreisbogen jeweils einen Ventilsitz (21, 22) aufweisen, der auf jeder Seite des Kolbens (11) von einer im wesentlichen kreisförmigen Ventilscheibe (23) beaufschlagt wird.

10. Kolben nach Anspruch 9, dadurch gekennzeichnet, daß der Ventilsitz (21, 22) als Dichtlippe ausgebildet ist, die jeweils von Eintrittsöffnung (13) zu Austrittsöffnung (14) radial im wesentlichen um ihre Breite versetzt angeordnet ist.

11. Kolben nach einem der vorstehenden Ansprüche, dadurch gekennzeichnet, daß die Wände der Einström- (12) und Ausströmkanäle gegenüber der Achsrichtung (16) des Kolbens (11) einen Winkel von höchstens etwa 15 Grad einschließen.

12. Kolben nach einem der vorstehenden Ansprüche, dadurch gekennzeichnet, daß die Einström- (12) und Ausströmkanäle (24) jeweils einen Einlauf und einen Auslauf aufweisen, die in Achsrichtung (16) des Kolbens (11) ausgebildet sind.

FIG. 1

FIG. 2